# EUROPEAN PATENT APPLICATION

(11) **EP 3 799 024 A1**
(43) Date of publication of application: **31.03.2021**
(21) Application number: 20198298.0
(22) Date of filing: 25.09.2020
(51) Int. Cl.: G09G 3/34, H02J 7/00, H05B 39/04

(54) **DISPLAY APPARATUS**

(30) Priority: 26.09.2019 JP 2019176052
(71) Applicant: Panasonic Intellectual Property Management Co., Ltd., Osaka-shi, Osaka 540-6207 (JP)
(72) Inventor: NAGATA, Masahiro, Osaka, 540-6207 (JP); MIYAMOTO, Kengo, Osaka, 540-6207 (JP)
(74) Representative: Appelt, Christian W.

(57) **Abstract**

An object of the present disclosure is to simplify electric cable connection. A display apparatus (1) according to an exemplary embodiment includes a pair of connection terminals (11, 12), a load control circuit (13), a power supply circuit (50), a charge storage element (55), and a display device (7). The pair of connection terminals (11, 12) is to be electrically connected between a load (20) and an AC power supply (AC). The load control circuit (13) is electrically connected between the pair of connection terminals (11, 12) and controls a current flowing through the load (20). The power supply circuit (50) is electrically connected between the pair of connection terminals (11, 12) and generates, based on power supplied from the AC power supply (AC), power to operate the load control circuit (13). The charge storage element (55) is charged with electricity by the power supply circuit (50). The charge storage element (55) powers the display device (7) at a power feeding timing including at least one of a timing for the display device (7) to update content displayed on a display screen or a timing for a light source, provided to illuminate the display screen of the display device (7), to emit light.

## Description

### Technical Field

The present disclosure generally relates to a display apparatus, and more particularly relates to a display apparatus including a display device, on which content displayed is updatable.

### Background Art

JP 2013-161638 A discloses an electronic information display apparatus, which is mounted on the front surface of a switch embedded in a building part such as a wall surface and includes an electronic information display unit provided on an operating surface of an operating handle. This electronic information display apparatus includes a built-in contact connected between a power supply and a load device such as a light fixture. Turning ON and OFF the contact built in the electronic information display apparatus by pushing the operating handle allows the load device to be selectively connected to, or disconnected from, the power supply, i.e., allows the load device to be turned ON or OFF.

The electronic information display apparatus described above needs power to operate the electronic information display unit, and therefore, includes two terminals, to which two electric cables for the power supply are connected and which are provided separately from two terminals, to which two electric cables for the load device (load) are connected. This allows a power supply unit of the electronic information display apparatus to be constantly powered by the power supply and to supply required power to the electronic information display unit and other parts. Connecting the two electric cables for the power supply and the two more electric cables for the load to the electronic information display apparatus makes the electric cable connection a time-consuming, troublesome job.

### Summary of Invention

It is therefore an object of the present disclosure to provide a display apparatus which contributes to simplifying the electric cable connection.

A display apparatus according to an aspect of the present disclosure includes a pair of connection terminals, a load control circuit, a power supply circuit, a charge storage element, and a display device. The pair of connection terminals is to be electrically connected between a load and an AC power supply. The load control circuit is electrically connected between the pair of connection terminals and controls a current flowing through the load The power supply circuit is electrically connected between the pair of connection terminals and generates, based on power supplied from the AC power supply, power to operate the load control circuit. The charge storage element is charged with electricity by the power supply circuit. The display device has a display screen. The charge storage element powers the display device at a power feeding timing. The power feeding timing includes at least one of a timing for the display device to update content displayed on the display screen or a timing for a light source, provided to illuminate the display screen of the display device, to emit light.

### Brief Description of Drawings

FIG. 1 is a schematic circuit diagram of a display apparatus according to an exemplary embodiment of the present disclosure;
FIG. 2 is a schematic block diagram of a management system including the display apparatus;
FIG. 3 is a front view illustrating an installed state of the display apparatus;
FIG. 4 illustrates the information displayed on the display screen of the display apparatus when a lighting load is turned OFF using the display apparatus;
FIG. 5 illustrates the information displayed on the display screen of the display apparatus when the lighting load is turned ON fully using the display apparatus;
FIG. 6 illustrates the information displayed on the display screen of the display apparatus when weather forecast information is provided on the display apparatus; and
FIG. 7 is a schematic circuit diagram of a display apparatus according to a variation of the exemplary embodiment of the present disclosure.

### Description of Embodiments

### (Embodiments)

### (1) Overview

Note that the drawings to be referred to in the following description of embodiments are all schematic representations. That is to say, the ratio of the dimensions (including thicknesses) of respective constituent elements illustrated on the drawings does not always reflect their actual dimensional ratio.

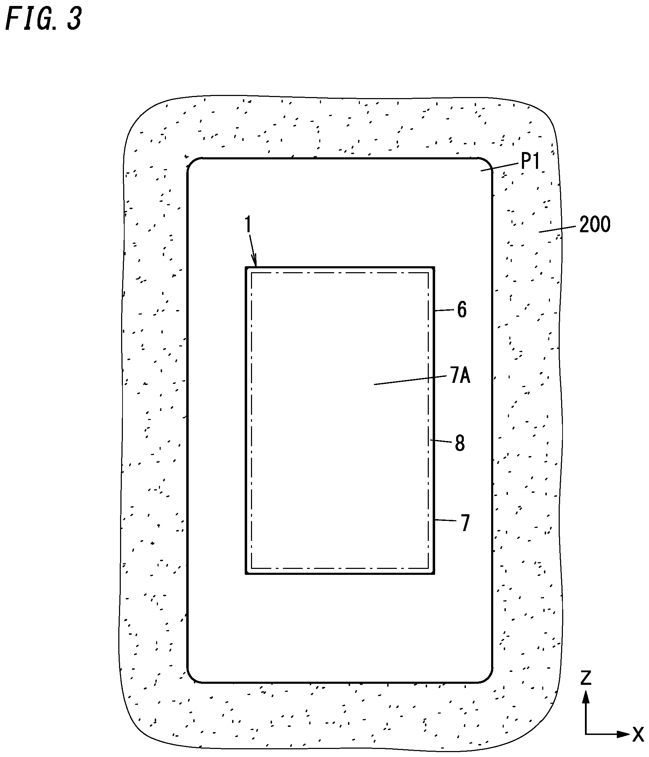

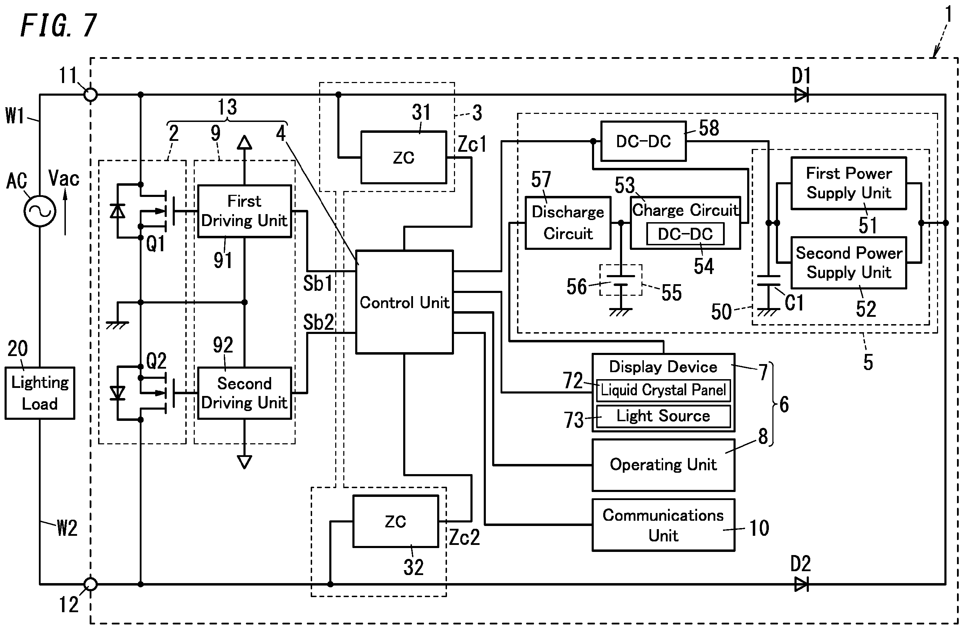

A display apparatus 1 according to an exemplary embodiment includes a pair of connection terminals 11, 12, a load control circuit 13, a power supply circuit 50, a charge storage element 55, and a display device 7. The pair of connection terminals 11, 12 is to be electrically connected between a load 20 and an AC power supply AC. The load control circuit 13 is electrically connected between the pair of connection terminals 11, 12 and controls a current flowing through the load 20. The power supply circuit 50 is electrically connected between the pair of connection terminals 11, 12 and generates, based on power supplied from the AC power supply AC, power to operate the load control circuit 13. The charge storage element 55 is charged with electricity by the power supply circuit 50. The display device 7 has a display screen 7A (see FIG. 3). The charge storage element 55 powers the display device 7 at a power feeding timing. The power feeding timing includes at least one of a timing for the display device 7 to update content displayed on the display screen 7A or a timing for a light source 73 (see FIG. 7), provided to illuminate the display screen 7A of the display device 7, to emit light.

As used herein, the "content displayed by the display apparatus 1" includes information displayed on the display screen 7A and "to update the content displayed" refers to updating the information displayed on the display screen 7A. The information displayed on the display screen 7A includes at least one, or a combination, selected from the group consisting of numerals, letters, figures (such as icons), emoticons, and video. In this case, the power consumption of the display device 7 increases at the power feeding timing including at least one of the timing for the display device 7 to update the content (i.e., information) displayed on the display screen 7A or the timing for the light source 73 to emit light, compared to a power feeding suspension period other than the power feeding timing.

In the display apparatus 1, the load control circuit 13 controls the electrical continuity (i.e., power supply state) from the AC power supply AC to the load 20 by making the pair of connection terminals 11, 12 either electrically conductive or electrically non-conductive with each other. When the load control circuit 13 makes the pair of connection terminals 11, 12 electrically non-conductive with each other, the supply of power to the load 20 is cut off. On the other hand, when the load control circuit 13 makes the pair of connection terminals 11, 12 electrically conductive with each other, power is supplied to the load 20. Note that when the load control circuit 13 makes the pair of connection terminals 11, 12 electrically conductive with each other, an interval for the power supply circuit 50 to acquire power from the AC power supply AC needs to be provided. Thus, in that case, the load control circuit 13 makes the pair of connection terminals 11, 12 electrically conductive intermittently. While the pair of connection terminals 11, 12 becomes electrically non-conductive with each other in the interval between the intermittently conductive periods, the power supply circuit 50 acquires power from the AC power supply AC. The power supply circuit 50 generates, based on the power supplied from the AC power supply AC via the pair of connection terminals 11, 12, the power to operate the load control circuit 13. In the non-conductive state, however, the leakage current needs to be reduced, and therefore, there is a limit to the power that the power supply circuit 50 may acquire from the AC power supply AC. Thus, there is also a limit to the power that the power supply circuit 50 may supply in the non-conductive state. In addition, in a situation where the pair of connection terminals 11, 12 is made electrically conductive intermittently, the power supply circuit 50 needs to acquire power from the AC power supply AC during only a short interval in which the pair of connection terminals 11, 12 becomes electrically non-conductive, and therefore, there is also a limit to the power that the power supply circuit 50 may supply. Therefore, when power is supplied from the power supply circuit 50 to the display device 7 at the power feeding timing, the limit to the power that may be supplied by the power supply circuit 50 sometimes prevents the display device 7 from being supplied with power required for its operation.

In contrast, in this display apparatus 1, the display device 7 is powered by the charge storage element 55 at the power feeding timing. This allows, even when the power supplied by the power supply circuit 50 is short of the required level, the display device 7 to be still supplied with the power required for its operation by the charge storage element 55. In addition, in this display apparatus 1, the load 20 and the AC power supply AC are connected to the pair of connection terminals 11, 12, thus requiring only two electric cables to be connected to the display apparatus 1. Thus, a display apparatus 1 contributing to simplifying the electric cable connection is provided.

### (2) Details

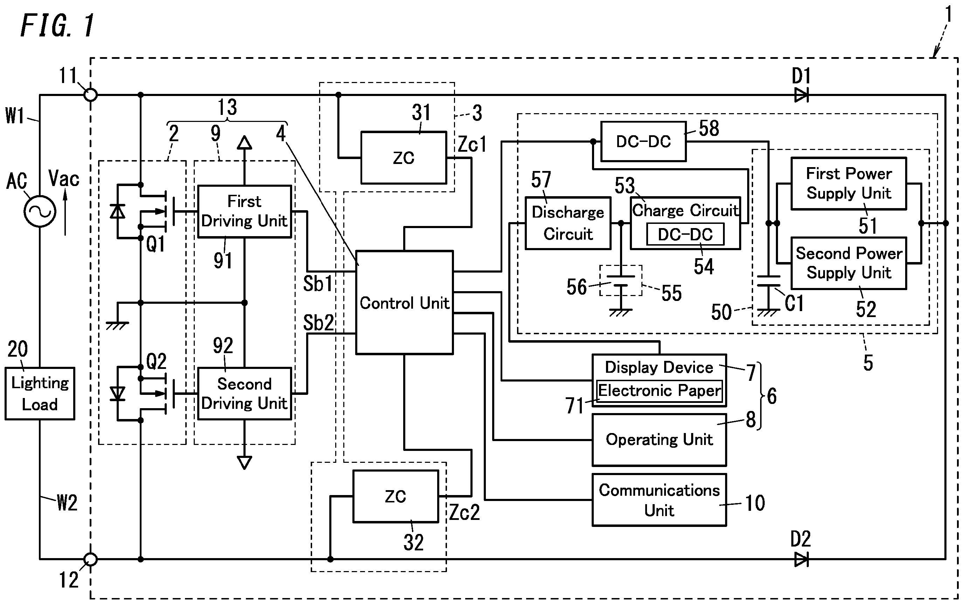

Next, a display apparatus 1 according to an exemplary embodiment will be described in detail with reference to FIGS. 1-6. In the following description, the X-axis direction shown in FIG. 3 is defined herein to be the rightward/leftward direction, the Z-axis direction shown in FIG. 3 is defined herein to be the upward/downward direction, and the direction perpendicular to the X-axis direction and the Z-axis direction is defined herein to be the forward/backward direction. Furthermore, the positive X-axis direction is defined herein to be the rightward direction, and the positive Z-axis direction is defined herein to be the upward direction. Note that these directions are only examples and should not be construed as limiting the direction in which the display apparatus 1 should be used. In addition, the arrows indicating the respective directions on the drawings are just shown there for the purpose of description and are actually insubstantial ones.

The display apparatus 1 according to this embodiment performs the function of a load controller for controlling the load 20. The display apparatus 1 according to this embodiment is implemented as an embedded interconnection device designed to be mounted on an installation surface 200 such as a wall surface of a building with its rear portion embedded in an embedding hole provided through the installation surface 200. Note that the display apparatus 1 does not have to be such an embedded interconnection device but may also be an exposed interconnection device mounted directly on the installation surface 200 or even an interconnection device for used at an arbitrary position without being fixed in place.

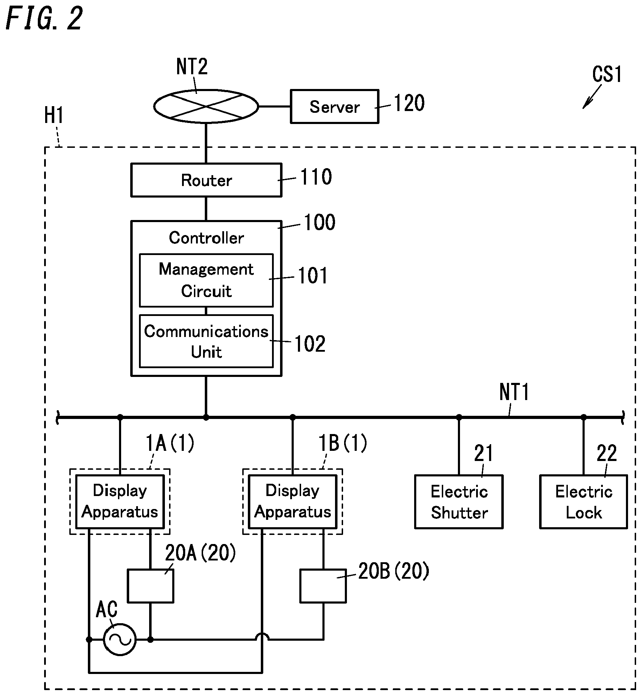

FIG. 2 illustrates a system configuration for a management system CS1 including the display apparatus 1 serving as a load controller. The management system CS1 performs various functions including monitoring and controlling the load 20 for use in a facility HI, monitoring the power consumption of the load 20, and communicating with an external server 120 over a network. As used herein, the "facility" refers to a building where the load 20 under the control of the display apparatus 1 is used and may be, for example, a building where the user of the load 20 lives or a building that the user uses just temporarily. The facility H1 according to this embodiment is powered by an electrical power supplier such as a utility company. However, this is only an example of the present disclosure and should not be construed as limiting. Alternatively, the facility H1 may also be powered by private (in-house) power generation equipment such as a solar power generator.

The management system CS1 is suitably a home energy management system (HEMS) for managing the energy for use in the facility H1. The HEMS performs the function of managing the use of the energy by the load 20 in the facility H1 and the function of controlling the load 20, for example.

The management system CS1 includes the display apparatus 1 serving as the load controller, a controller 100, and a router 110, and manages a plurality of loads 20 either directly or indirectly.

Next, respective configurations for the controller 100 and the display apparatus 1 as constituent elements of the management system CS1 will be described.

### (2.1) Controller

As shown in FIG. 2, the controller 100 includes a management circuit 101 and a communications unit 102. The controller 100 may be implemented as, for example, a HEMS controller, and performs the function of monitoring the states of a plurality of loads 20 either directly or indirectly, and the function of controlling the plurality of loads 20 either directly or indirectly.

The communications unit 102 includes a communications interface compliant with the Ethernet® standard, for example, and has the capability of establishing communication over an in-house network NT1. That is to say, the controller 100 is connected to the in-house network NT1.

The management circuit 101 is suitably implemented as a computer system. In that case, the computer system may include, as principal hardware components, a processor and a memory. The function of the management circuit 101 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). As used herein, the "integrated circuit" such as an IC or an LSI is called by a different name depending on the degree of integration thereof. Examples of the integrated circuits include a system LSI, a very largescale integrated circuit (VLSI), and an ultra largescale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a largescale integrated circuit.

The management circuit 101 may instruct the communications unit 102 to transmit an image signal including image data. The management circuit 101 stores in advance, in a memory of the management circuit 101, image data representing multiple types of contents (or information) to be displayed on the display apparatus 1. The management circuit 101 reads, from the memory, either image data representing a command entered through an operating unit 8 that the display apparatus 1 includes or image data representing an operating state of the load 20 in accordance with the command entered through the operating unit 8, and instructs the communications unit 102 to transmit an image signal including the image data that has been read out to the display apparatus 1. The communications unit 102 transmits the image signal to the display apparatus 1 over the in-house network NT1. The image signal includes the identification information (such as an IP address or a MAC address) of the display apparatus 1 as the destination. When finding the identification information included in the image signal received from the communications unit 102 matching its own identification information, a control unit 4 of the display apparatus 1 has information corresponding to the image data displayed on the display screen 7A of the display device 7.

In the example illustrated in FIG. 2, two display apparatuses 1, an electric shutter 21, and an electric lock 22 are connected to the in-house network NT1. The display apparatuses 1, the electric shutter 21, the electric lock 22, and the controller 100 are able to communicate with each other over the in-house network NT1. The communication over the in-house network NT1 may be compliant with the Ethernet® standard, for example.

A router 110 is further connected to the in-house network NT1. The router 110 may be a broadband router, for example. Thus, the controller 100 is connected to an external broadband network NT2, including the Internet, via the router 110. The external server 120 is also connected to the broadband network NT2. The controller 100 and the server 120 may communicate with each other over the broadband network NT2.

The router 110 may include a wireless LAN communications interface compliant with the Wi-Fi® standard, for example. In that case, the controller 100 is able to communicate with a telecommunications device (not shown) such as a smartphone including a wireless LAN communications interface and a monitor device dedicated to HEMS, for example, via the router 110.

Optionally, the controller 100 may include a low power radio communications interface requiring no radio station license. As for this type of low power radio, specifications such as the frequency band and antenna power for use according to the intended application are defined in various countries around the world. In the country of Japan, for example, a low power radio standard that specifies the use of radio waves falling within the 902 MHz band or the 420 MHz band (Specified Low Power Radio standard) is established. In the facility HI, for example, a power measuring unit for measuring the respective currents, powers, voltages, or any other parameters of the trunk lines and a plurality of branch circuits of the facility H1 is installed. The controller 100 receives the respective measured values from the power measuring unit via low power radio communication. In addition, the controller 100 also transmits information for controlling the electrical equipment (including the load 20, the electric shutter 21, and the electric lock 22) for use in the facility H1 to an electrical device as the target of control via the low power radio communication.

### (2.2) Display apparatus

In FIG. 2, the management system CS1 may include two display apparatuses 1, for example, to each of which a load 20 is connected. In the following description, when the two display apparatuses 1 need to be distinguished from each other, the display apparatuses 1 will be hereinafter designated by the reference signs 1A and 1B, respectively. Likewise, when the two loads 20 need to be distinguished from each other, the loads 20 will be hereinafter designated by the reference signs 20A and 20B, respectively.

The display apparatus 1 is implemented as a two-wire interconnection device as described above. For example, a light fixture may be connected to the display apparatus 1 as a load 20 for the display apparatus 1. The display apparatus 1 may also serve as a load controller for turning the light fixture ON (either fully or with its dimming level adjusted) or OFF by controlling the electric current flowing through the light fixture as the load 20. That is to say, the display apparatus 1 has the capability of displaying the operating state of the load 20 connected to the display apparatus 1 and the capability of controlling the operating state of the load 20 in accordance with the user's command or a control signal supplied from the controller 100. Note that the load 20 does not have to be a light fixture including an LED or any other light source as exemplified in this embodiment but may also be a ventilation fan, an electric shutter, an air conditioner, a crime prevention device, or any other electrical device. In addition, the load 20 does not have to be a single device but may also be a plurality of devices that are connected together either in series or in parallel. In addition, the display apparatus 1 also has the capability of displaying the operating states of the electrical equipment for use in the facility H1 (including the load 20 connected to another display apparatus 1, the electric shutter 21, and the electric lock 22) and the capability of accepting a command to change the operating states thereof. Moreover, the display apparatus 1 further has the capability of displaying external information acquired from the controller 100 or the server 120, for example. Examples of the external information include life-related information such as a weather forecast.

The display apparatus 1 is used to be electrically connected, via the load 20, to the AC power supply AC in series. When energized (i.e., supplied with an electric current), the load 20 turns ON. The load 20 may include, for example, a light source such as a light-emitting diode (LED) and a lighting circuit for lighting the light source. The AC power supply AC may be a single-phase 100 V, 60 Hz utility power supply, for example.

The user operates the display apparatus 1 for the purposes of turning ON or OFF, or adjusting the dimming level of, a light fixture as the load 20, controlling the electric shutter 21 and the electric lock 22, and displaying external information acquired from the server 120, for example. Optionally, the light fixture connected as the load 20 to the display apparatus 1 may be designed to have its color adjusted.

As shown in FIG. 3, the display apparatus 1 is embedded in the installation surface 200 such as a wall surface of the facility H1. An embedding box (not shown) is embedded in the installation surface 200. The embedding box is formed in the shape of a rectangular box with an open front side. On the installation surface 200, an interconnection device plate P1 in the shape of a rectangular frame surrounds the display apparatus 1.

Next, a circuit configuration for the display apparatus 1 will be described with reference to FIGS.1 and 2. The display apparatus 1 includes a pair of connection terminals 11, 12, a load control circuit 13 including a bidirectional switch 2, a control unit 4, a power supply unit 5, and a display device 7. The power supply unit 5 includes: a power supply circuit 50 including a first power supply unit 51, a second power supply unit 52, and a capacitor C1; a charge circuit 53; a charge storage element 55 implemented as a secondary battery 56; and a discharge circuit 57. The display apparatus 1 further includes a phase detection unit 3, an operating unit 8, a switch driving unit 9, and a communications unit 10.

The pair of connection terminals 11, 12 is electrically connected between the load 20 implemented as a lighting load and the AC power supply AC. A series circuit of the AC power supply AC and the load 20 is electrically connected to the pair of connection terminals 11, 12 via a pair of electric cables W1, W2.

The load control circuit 13 is electrically connected between the pair of connection terminals 11, 12 to control the electric current flowing through the load 20. The load control circuit 13 includes a bidirectional switch 2 configured to selectively cut off or pass an electric current bidirectionally between the connection terminals 11, 12. The bidirectional switch 2 may include, for example, two switching elements Q1, Q2, which are electrically connected in series between the connection terminals 11, 12. Each of the switching elements Q1, Q2 may be implemented as, for example, a semiconductor switching element such as an enhancement n-channel metal-oxide semiconductor field-effect transistor (MOSFET).

The switching elements Q1, Q2 are connected in anti-series between the connection terminals 11, 12. That is to say, the switching elements Q1, Q2 have their respective sources connected together. The drain of the switching element Q1 is connected to the connection terminal 11. The drain of the switching element Q2 is connected to the connection terminal 12. The respective sources of these two switching elements Q1, Q2 are connected to the ground of the power supply unit 5. Note that the ground of the power supply unit 5 defines a reference potential for the internal circuits of the display apparatus 1.

The switch driving unit 9 includes: a first driving unit 91 for switching the ON/OFF states of the switching element Q1 in accordance with a control signal Sb1 supplied from the control unit 4; and a second driving unit 92 for switching the ON/OFF states of the switching element Q2 in accordance with a control signal Sb2 supplied from the control unit 4. The ON/OFF states of the switching elements Q1, Q2 included in the bidirectional switch 2 are switched by the switch driving unit 9. In this case, the bidirectional switch 2 may have its state switched from an ON state (conductive state) where an electric current flows bidirectionally between the connection terminals 11, 12 to an OFF state (non-conductive state) where no electric current flows between the connection terminals 11, 12, or vice versa, according to a combination of the ON/OFF states of the switching elements Q1, Q2.

The phase detection unit 3 detects the phase of an AC voltage Vac applied to between the connection terminals 11, 12 from the AC power supply AC. As used herein, the "phase" includes the zero-crossing point of the AC voltage Vac and the polarity (which is either positive or negative) of the AC voltage Vac. The phase detection unit 3 is configured to output, when detecting a zero-crossing point of the AC voltage Vac, a detection signal to the control unit 4. The phase detection unit 3 includes a first detection unit 31 and a second detection unit 32. Note that in FIG. 1 and other drawings, the first detection unit 31 and the second detection unit 32 are each designated simply by the reference sign "ZC." The first detection unit 31 is electrically connected to the connection terminal 11. The second detection unit 32 is electrically connected to the connection terminal 12. The first detection unit 31 detects a zero-crossing point at which the AC voltage Vac makes a transition from a negative half-cycle to a positive half cycle. The second detection unit 32 detects a zero-crossing point at which the AC voltage Vac makes a transition from the positive half-cycle to the negative half cycle.

On detecting that the voltage applied when the connection terminal 11 serves as a high potential terminal has changed from a value less than a predetermined value to a value equal to or greater than the predetermined value, the first detection unit 31 determines that a zero-crossing point should have been detected and outputs a first detection signal Zc1 to the control unit 4. In the same way, on detecting that the voltage applied when the connection terminal 12 serves as a high potential terminal has changed from a value less than a predetermined value to a value equal to or greater than the predetermined value, the second detection unit 32 determines that a zero-crossing point should have been detected and outputs a second detection signal Zc2 to the control unit 4. The predetermined value is an absolute value set in the vicinity of zero V For example, the predetermined value of the first detection unit 31 may be on the order of plus few volts, and the predetermined value of the second detection unit 32 may be on the order of minus few volts. Thus, there could be some time lag between the zero-crossing point detected by the first detection unit 31 and the second detection unit 32 and a zero-crossing point (0 V) in a strict sense.

The control unit 4 controls (the phase of) a conductive period (i.e., a conductive angle) in which the bidirectional switch 2 is electrically conductive based on either the detection signal supplied from the operating unit 8 or the control signal supplied from the controller 100 and the detection signal supplied from the phase detection unit 3. The control unit's 4 regulating the conductive period in which the bidirectional switch 2 turns electrically conductive every half wave of the AC voltage Vac allows the load 20 to be turned ON or OFF or have its dimming level adjusted.

The display device 7 may be a self-holding display unit, for example. As used herein, the self-holding display unit is a display unit, of which the power consumption is less when the content displayed on the display screen 7A is retained than when the content displayed on the display screen 7A is changed. In this embodiment, the display device 7 is implemented as, for example, an electronic paper display 71 with the ability to conduct a monochrome display operation in black and white. The electronic paper display 71 may be implemented as, for example, an electrophoretic electronic paper display, which is configured to conduct a monochrome display operation by causing black and white particles contained along with a fluid in microcapsules to move with an electric field applied. Note that the electronic paper display 71 does not have to conduct the monochrome display operation in the two colors of black and white but may conduct a multi-color display operation in three or more colors. The power consumption of the electronic paper display 71 increases at a timing when the information displayed on the display screen 7A is updated but its power consumption is substantially equal to zero when the information displayed on the display screen 7A is retained. Thus, the electronic paper display 71 is a display device with a lower power consumption than liquid crystal displays generally used. As shown in FIG. 3, the display device 7 is provided to cover almost the entire front surface of the display apparatus 1 and is exposed through the opening of the interconnection device plate P1.

The information displayed on the display screen 7A of the display device 7 is updated by the control unit 4. For example, when the communications unit 10 receives the image data from the controller 100, the control unit 4 has information, based on the image data, displayed on the display screen 7A of the display device 7. Optionally, the display apparatus 1 may include a memory and may store, in the memory, image data corresponding to various types of commands to be entered through the operating unit 8. In that case, the control unit 4 may update the information displayed on the display screen 7A by reading image data corresponding to a command entered through the operating unit 8 from the memory every time the command is entered through the operating unit 8.

The operating unit 8 includes, for example, a touchscreen sensor mounted on the entire surface of the display device 7. That is to say, the display apparatus 1 includes, as a user interface, a touchscreen panel 6 including the display device 7 and the operating unit 8. The touchscreen sensor is a known touchscreen sensor of a resistive, capacitive or electromagnetically inductive type. The touchscreen sensor detects the user's command entered through the operation of touching the surface of the touchscreen sensor with a finger or a stylus, for example (such as tapping, flicking, swiping and dragging) and outputs a detection signal corresponding to the command entered to the control unit 4. Note that the operating unit 8 does not have to be implemented as a touchscreen sensor but just needs to be configured to output, in accordance with the user's command, a detection signal corresponding to the command entered to the control unit 4. For example, the operating unit 8 may also be implemented as a push button switch, a variable resistor, or a rotary switch, for example. Optionally, the touchscreen panel 6 may further include an actuator for producing vibrations on the display screen 7A of the display device 7 when the operating unit 8 is operated or a loudspeaker emitting a sound corresponding to the operation.

The communications unit 10 may include a communications interface compliant with the Ethernet® standard, for example, and be able to establish communication over the in-house network NT1. Alternatively, the communications unit 10 may include a wireless communications interface compliant with a communications protocol requiring no radio station license such as the Wi-Fi®, BLE (Bluetooth® Low Energy) or Low Power Radio standard. The communications unit 10 may communicate with a telecommunications device such as a smartphone including a wireless communications interface or a monitor device dedicated to HEMS. For example, in a smartphone used by the user of the facility H1, installed is an application software program for checking or changing the operating state of the electrical equipment (such as the load 20, the electric shutter 21 or the electric lock 22) for use in the facility H1. When the user enters a command by performing the operation of changing the operating state of any desired load 20 using the application software program installed in the smartphone, a control signal corresponding to the command entered is transmitted from the smartphone and received by the communications unit 10.

The control unit 4 controls the bidirectional switch 2 in accordance with the detection signal supplied from the phase detection unit 3 and the detection signal supplied from the operating unit 8. The control unit 4 controls the switching elements Q1, Q2 separately from each other. Specifically, the control unit 4 controls the switching element Q1 with a first control signal Sb1 and also controls the switching element Q2 with a second control signal Sb2. In addition, the control unit 4 further has the capability of switching a charge unit to make a charge current flow through the capacitor C1 to either the first power supply unit 51 or the second power supply unit 52. The control unit 4 selects, as the charge unit to make a charge current flow through the capacitor C1, the first power supply unit 51 in an extinction mode for turning the load 20 OFF and selects the second power supply unit 52 in a lighting mode for turning the load 20 ON either fully or with the dimming level adjusted.

The control unit 4 may include, as its major constituent element, a microcomputer, for example. The microcomputer performs the function of the control unit 4 by having a program stored in the memory of the microcomputer executed by a central processing unit (CPU). The program may be stored in advance in the memory of the microcomputer, distributed after having been recorded on a storage medium such as a memory card, or downloaded via a telecommunications line. In other words, the program described above is designed to cause a computer (e.g., a microcomputer in this example) to perform the function of the control unit 4.

The power supply unit 5 includes the power supply circuit 50, the charge circuit 53, the charge storage element 55, and the discharge circuit 57. The power supply circuit 50 includes the first power supply unit 51, the second power supply unit 52, the capacitor C1, and a DC-DC converter circuit 58. Note that in FIG. 1, the DC-DC converter circuit 58 is designated simply by the reference sign "DC-DC."

The power supply circuit 50 is electrically connected to the connection terminal 11 via a diode D1 and also electrically connected to the connection terminal 12 via a diode D2. Also, the ground of the power supply circuit 50 is electrically connected to a connection node where respective parasitic diodes of the two switching elements Q1, Q2 are connected together. This allows the AC voltage Vac applied between the connection terminals 11, 12 to be full-wave rectified by a diode bridge made up of the two diodes D1, D2 and the respective parasitic diodes of the two switching elements Q1, Q2 and supplied to the power supply circuit 50. Thus, while the bidirectional switch 2 is in OFF state, the full-wave rectified AC voltage Vac (i.e., a pulsated voltage output from the diode bridge) is applied to the power supply circuit 50.

The power supply circuit 50 includes the capacitor C1 to be charged by either the first power supply unit 51 or the second power supply unit 52 and the DC-DC converter circuit 58 for converting the voltage between both terminals of the capacitor C1 into a DC voltage with a predetermined voltage value (of 3 V, for example). The output voltage of the DC-DC converter circuit 58 is supplied to the control unit 4 and the charge circuit 53. Also, the power supply circuit 50 steps up or down the output voltage of the DC-DC converter circuit 58 to about 9V, for example, and supplies the stepped up or down voltage to the switch driving unit 9. The power supply circuit 50 generates, based on the power acquired from the AC power supply AC, operating power to operate the load control circuit 13 (including the control unit 4, the switch driving unit 9, and the bidirectional switch 2). Optionally, the power supply circuit 50 may supply the operating unit 8 and the communications unit 10 with power required for their operation.

The first power supply unit 51 is a circuit for causing an electric current to flow from the connection terminals 11, 12 to the capacitor C1 in the extinction mode to turn the load 20 OFF and may be implemented as a constant-voltage circuit such as a series regulator circuit.

The second power supply unit 52 is a circuit for causing an electric current to flow from the connection terminals 11, 12 to the capacitor C1 in the lighting mode to turn the load 20 ON (either fully or with the dimming level adjusted). In the lighting mode, in the conductive period corresponding to the dimming level of the load 20, the bidirectional switch 2 becomes electrically conductive. That is to say, during an OFF period (i.e., the non-conductive period) from the zero-crossing point of the AC voltage Vac through a point in time when the bidirectional switch 2 turns ON, the second power supply unit 52 charges the capacitor C1 every half cycle of the AC voltage Vac. Thus, in the lighting mode, the charge current flows through the capacitor C1 for a shorter time, and the magnitude (absolute value) of the AC voltage Vac decreases in the charge current flowing period particularly when the load 20 is turned ON fully, compared to the extinction mode. That is why the second power supply unit 52 needs to charge the capacitor C1 in a short time. Therefore, the second power supply unit 52 has a lower impedance as viewed from the connection terminals 11, 12 than the first power supply unit 51 does. This allows the second power supply unit 52 to charge the capacitor C1 in a shorter time than the first power supply unit 51. Consequently, even in the lighting mode in which the capacitor C1 needs to be charged in a shorter time, the energy required to operate the control unit 4 and other units may be stored in the capacitor C1.

The display apparatus 1 according to this embodiment includes the display device 7. The display device 7 is a self-holding display unit, of which the power consumption is substantially zero during the period in which the information displayed on its display screen 7A is retained. However, at a timing when the information displayed is updated, the power consumption of the display device 7 could increase too much for the capacitor C1 of the power supply circuit 50 to supply power required for the operation. Thus, to overcome such a problem, the display apparatus 1 further includes the charge storage element 55, of which the capacitance is larger than that of the capacitor C1 of the power supply circuit 50. The charge storage element 55 may include a secondary battery 56, for example. The secondary battery 56 may be a lithium-ion battery, for example, but may also be a lithium polymer battery, a nickel hydrogen battery, or an all solid-state battery. Furthermore, the charge storage element 55 does not have to be a secondary battery 56 but may also be a charge storage element such as an electric double layer capacitor. The capacitance of the charge storage element 55 is larger than that of the capacitor C1 to serve as a power supply for the control unit 4 and other units, and therefore, the charge storage element 55 may be charged sufficiently during a period in which the display device 7 does not conduct the display operation (e.g., at night or when the user is absent from home). This allows, even if the display device 7 continuously performs the operation of updating the information displayed, the display device 7 to be supplied with power required for its operation by the secondary battery 56.

The charge circuit 53 charges the secondary battery 56 with an output current of the power supply circuit 50. The power supply circuit 50 also powers the control unit 4 and other units. Thus, the charge circuit 53 charges the secondary battery 56 with a part of the current supplied from the power supply circuit 50. The charge circuit 53 includes a voltage converter circuit 54 for converting the output voltage of the power supply circuit 50. The voltage converter circuit 54 may include a linear voltage regulator, for example, and converts (e.g., steps down) the output voltage of the DC-DC converter circuit 58 into a DC voltage with a predetermined voltage value, thereby charging the secondary battery 56. In this case, the charge circuit 53 suitably has an overcharge protection function of stopping, on detecting overcharge of the secondary battery 56, charging the secondary battery 56 immediately. Note that in FIG. 1 and other drawings, the voltage converter circuit 54 is designated simply by the reference sign "DC-DC."

If the power consumption of the display device 7 increases to cause a decrease in the voltage applied to the display device 7 at a timing when the display device 7 updates the information displayed on the display screen 7A, for example, the discharge circuit 57 starts supplying power to the display device 7 using the secondary battery 56 as a power supply. That is to say, the discharge circuit 57 has electricity discharged from the secondary battery 56, converts (e.g., steps down) the voltage of the secondary battery 56 into a DC voltage with a predetermined voltage value, and applies the voltage to the display device 7. This allows, even when the power consumption of the display device 7 increases, the display device 7 to be supplied with power required for its operation so that the display device 7 may operate properly. Optionally, when notified by the control unit 4 of the timing when the display device 7 updates the information displayed on the display screen 7A, the discharge circuit 57 may start supplying power to the display device 7 using the secondary battery 56 as a power supply. Also, the discharge circuit 57 allows electricity to be discharged from the charge storage element 55 at the power feeding timing and suspends discharging electricity from the charge storage element 55 during a power feeding suspension period other than the power feeding timing. This reduces the chances of the quantity of electrical charges stored in the charge storage element 55 decreasing during the power feeding suspension period, thus avoiding an unwanted situation where the quantity of electrical charges stored in the charge storage element 55 is short of a required level at the power feeding timing when power needs to be supplied from the charge storage element 55. Also, in the power feeding suspension period, the charge storage element 55 is charged by the charge circuit 53.

In this case, the discharge circuit 57 suitably has over-discharge protection function of stopping discharging electricity from the secondary battery 56 on sensing over-discharge from the secondary battery 56. Note that the communications unit 10 consumes a lot of power for the purpose of communication. Thus, at a timing when the communications unit 10 needs to establish communication, the discharge circuit 57 may supply power required for the communications unit 10 to operate by using the secondary battery 56 as a power supply.

In the embodiment described above, the charge circuit 53 for charging the secondary battery 56 and the discharge circuit 57 for controlling discharging from the secondary battery 56 are implemented as two different circuits. However, this is only an example of the present disclosure and should not be construed as limiting. Alternatively, the secondary battery 56 may also be charged and discharged by a charge/discharge circuit including a voltage step-up/down transformer circuit.

### (2.4) Operation

When the AC power supply AC is connected between the connection terminals 11, 12 via the load 20, the AC voltage Vac applied from the AC power supply AC to between the connection terminals 11, 12 is rectified so that the rectified AC voltage is supplied to the power supply unit 5. At the time of startup, the load 20 is in the extinction mode. Thus, the capacitor C1 is charged via the first power supply unit 51 and voltage required for operation is supplied from the capacitor C1 to the control unit 4 and other units, thus activating the control unit 4. Also, when an electric current flows from the power supply circuit 50 (i.e., the capacitor C1) through the charge circuit 53, the voltage converter circuit 54 included in the charge circuit 53 converts (e.g., steps up) the output voltage of the power supply circuit 50 into DC voltage with a predetermined voltage value, thereby charging the secondary battery 56.

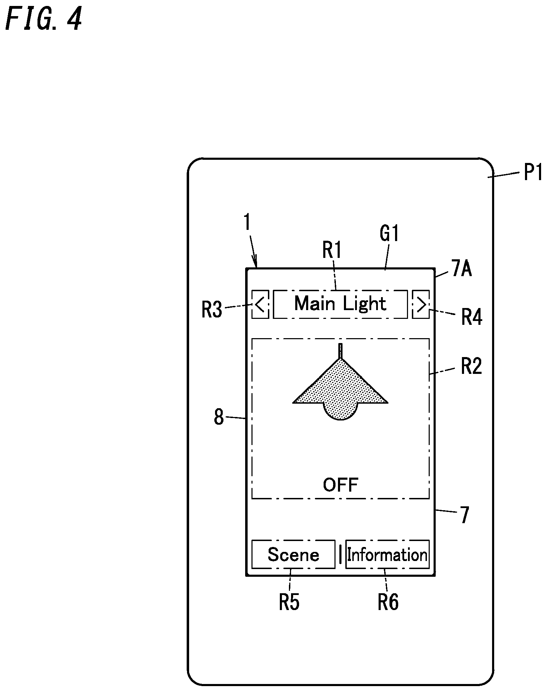

When activated, the control unit 4 determines the frequency of the AC power supply AC based on the detection signal supplied from the phase detection unit 3. Then, the control unit 4 makes reference, according to the frequency thus determined, to a numerical value table stored in advance in a memory, thereby setting parameters including various times (such as a one-cycle period and a conductive period corresponding to a dimming level). In this case, if the operating unit 8 does not accept the command of turning the load 20 ON, the control unit 4 controls the load 20 to the OFF state by turning the bidirectional switch OFF. On turning the load 20 OFF, the control unit 4 has status information transmitted, as a notification of the OFF state of the load 20, from the communications unit 10 to the controller 100. In accordance with the status information provided by the display apparatus 1, the management circuit 101 of the controller 100 has image data representing the OFF state of the load 20 transmitted from the communications unit 102 to the display apparatus 1. Then, based on the image data provided by the controller 100, the control unit 4 of the display apparatus 1 has an image G1 (see FIG. 4) representing the OFF state of the load 20 displayed on the display screen 7A of the display device 7. In this case, at a timing when the information displayed on the display screen 7A of the display device 7 is updated, greater power is required than when the information displayed is retained. Thus, at the timing when the display device 7 updates the information displayed, the discharge circuit 57 has electricity discharged from the secondary battery 56, converts the charge voltage of the secondary battery 56 into a DC voltage with a predetermined voltage value, and supplies the DC voltage to the display device 7. When the display device 7 finishes the update operation to cause a decrease in its power consumption, the discharge circuit 57 stops discharging from the secondary battery 56 and stops supplying power to the display device 7. Optionally, when notified by the control unit 4 of the timing for the display device 7 to update the information displayed, the discharge circuit 57 may start discharging electricity from the secondary battery 56. Alternatively, on sensing power shortage by a decrease in the voltage applied to the display device 7, for example, the discharge circuit 57 may start discharging electricity from the secondary battery 56. In this manner, the display device 7 is supplied with power required for its operation, and thereby allowed to perform the operation of updating the information displayed on the display screen 7A.

In this case, the image G1 displayed on the display screen 7A of the display device 7 when the display apparatus 1 turns the load 20 OFF is an image in a switch mode in which the operating state of the load 20 as the target is displayed or changed. An upper middle region of the image G1 is a label region R1 where the letters "main light," indicating the name of the load 20 as the target (e.g., the load 20 connected to the display apparatus 1), are displayed. Under the label region R1, there is a notification region R2 indicating the status of the load 20. In the notification region R2, displayed are an icon representing the OFF state and the letter "OFF." This allows the user to recognize, by looking at the image G1, that the load 20 is in OFF state.

On the left of the label region R1, there is an operating region R3, in which a sign "<" indicating the leftward direction is displayed. On the right of the label region R1, there is another operating region R4, in which a sign ">" indicating the rightward direction is displayed. Under the notification region R2, provided are operating regions R5, R6, which are arranged side by side in the rightward/leftward direction. In the operating region R5, displayed is the letter "scene." In the operating region R6, displayed is the letter "information."

To turn ON the load 20 as the target, the user performs a touch operation on the notification region R2 of the image G1. When the touch operation is performed on the notification region R2 of the image G1, the operating unit 8 accepts the user's command entered through the touch operation and outputs a detection signal (e.g., a detection signal to turn the load 20 ON fully) to the control unit 4 in accordance with the command accepted. In accordance with the detection signal supplied from the operating unit 8 and the result of detection obtained by the phase detection unit 3, the control unit 4 controls the conductive period of the bidirectional switch 2, thereby controlling the amount of electric current flowing through the load 20 to turn the load 20 ON. For example, to turn the load 20 ON fully (i.e., to light the load 20 at a dimming level of 100%), the control unit 4 turns the bidirectional switch 2 ON at a timing when a charge period for the capacitor C1 passes since the zero-crossing point of the AC voltage Vac every half cycle of the AC voltage Vac. Then, the control unit 4 turns the bidirectional switch 2 OFF at a timing when the conductive period corresponding to the dimming level passes since the timing when the bidirectional switch 2 has been turned ON. When the bidirectional switch 2 turns ON, an electric current large enough to turn the load 20 ON flows, thereby turning the load 20 ON. Since the conductive period in which the bidirectional switch 2 is in ON state (i.e., the period in which an electric current flows through the load 20) varies according to the dimming level, the load 20 may be lit with brightness corresponding to the dimming level.

In this case, in the ON state in which the load 20 is turned ON, the voltage between the connection terminals 11, 12 becomes substantially equal to zero during the conductive period in which the bidirectional switch 2 is electrically conductive. Thus, in the conductive period, the power supply circuit 50 is unable to charge the capacitor C1. Therefore, the second power supply unit 52 charges the capacitor C1 in a short time during the period in which the bidirectional switch 2 is in OFF state every half cycle of the AC voltage Vac, e.g., during an interval between the zero-crossing point of the AC voltage Vac and a point in time when the bidirectional switch 2 turns ON, thereby ensuring power for the control unit 4 and other units.

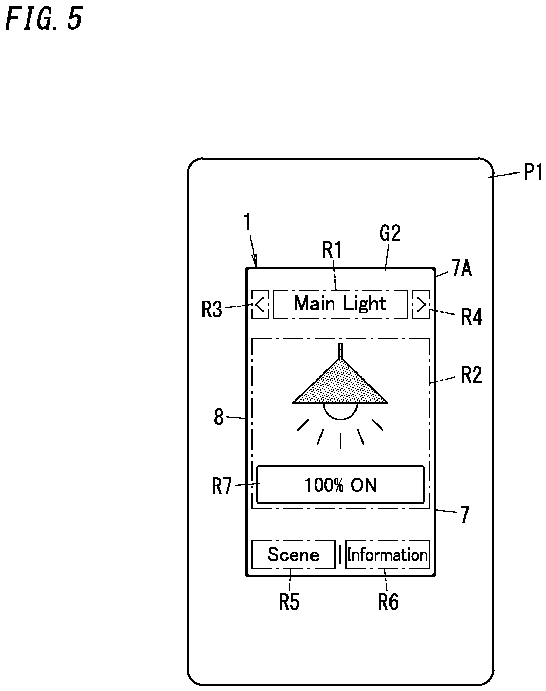

When turning the load 20 ON, the control unit 4 has status information, indicating that the load 20 is in ON state (or that the operation of turning the load 20 ON has been performed), transmitted from the communications unit 10 to the controller 100. In accordance with the status information provided by the display apparatus 1, the management circuit 101 of the controller 100 has image data representing the ON state of the load 20 transmitted from the communications unit 102 to the display apparatus 1. Then, the control unit 4 of the display apparatus 1 displays, based on the image data provided by the controller 100, an image G2 indicating that the load 20 is in ON state (see FIG. 5) on the display screen 7A of the display device 7. In this case, at a timing when the display device 7 updates the information displayed on the display screen 7A, greater power is required than when the information displayed is retained. Thus, at the timing when the display device 7 updates the information displayed, the discharge circuit 57 discharges electricity from the secondary battery 56, converts the charge voltage of the secondary battery 56 into DC voltage with a predetermined voltage value, and supplies the DC voltage to the display device 7. When the display device 7 finishes the update operation to cause a decrease in its power consumption, the discharge circuit 57 stops discharging electricity from the secondary battery 56 and stops supplying power to the display device 7.

In the notification region R2 of the image G2 indicating the ON state of the load 20, displayed are an icon representing the ON state and the letters "100% ON." In the notification region R2, the region where the letters "100% ON" are displayed serves as an operating region R7. When a touch operation is performed on the operating region R7 of the image G2, the operating unit 8 accepts a command entered through the touch operation and outputs an operating signal to display a screen for changing the ON state of the load 20 to the control unit 4. In response, the control unit 4 has the operating signal supplied from the operating unit 8 transmitted from the communications unit 10 to the controller 100. Then, the control unit 4 has a selection image for changing the ON state of the load 20 displayed on the display screen 7A of the display device 7. In this case, at a timing when the display device 7 changes the information displayed on the display screen 7A, the discharge circuit 57 discharges electricity from the secondary battery 56, converts the charge voltage of the secondary battery 56 into DC voltage with a predetermined voltage value, and supplies the DC voltage to the display device 7. The selection image for changing the ON state of the load 20 allows the user to select any desired dimming level (including a dimming level of 0% indicating the OFF state) for the load 20. When the user selects a desired dimming level, the control unit 4 controls the conductive period of the bidirectional switch 2 according to the dimming level selected, thereby turning the load 20 ON at the dimming level selected. In addition, the control unit 4 also has notification information indicating the dimming level for the load 20 transmitted from the communications unit 10 to the controller 100.

When a touch operation is performed on the operating region R5 of the image G1 or G2, the display apparatus 1 has scene mode images, allowing the user to choose any desired scene from various scenes in life (such as wakeup, going to bed, and watching TV), displayed on the display screen 7A of the display device 7. In this case, the operating states of a plurality of electrical devices including the load 20 have been set in advance for each of the plurality of scenes.

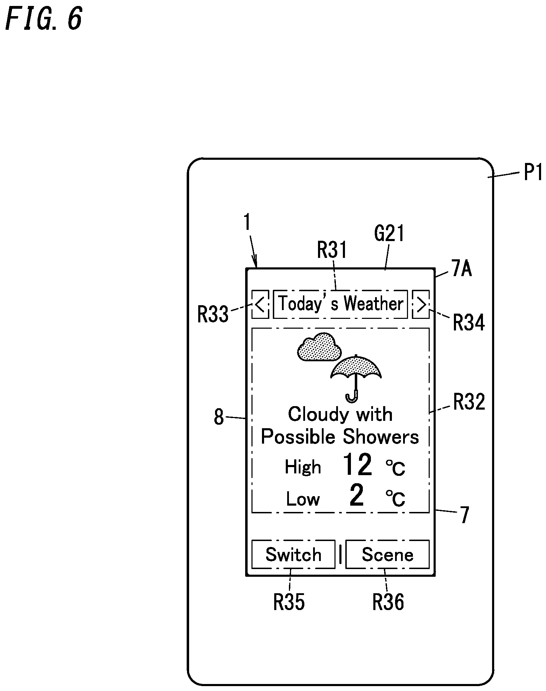

Alternatively, when a touch operation is performed on the operating region R6 of the image G1 or G2, the display apparatus 1 has an image in an information presentation mode presenting external information displayed on the display screen 7A of the display device 7. When the touch operation is performed on the operating region R6 of the image G1 or G2, the control unit 4 has status information, indicating that the display mode of the display apparatus 1 has been switched to the information presentation mode, transmitted from the communications unit 10 to the controller 100. Next, when the controller 100 transmits, in accordance with the status information provided by the display apparatus 1, image data representing the information presentation mode to the display apparatus 1, the control unit 4 of the display apparatus 1 has an image G21 (see FIG. 6) displayed on the display screen 7A of the display device 7 based on the image data.

The management circuit 101 of the controller 100 may acquire various types of external information from the server 120, for example. Examples of the external information acquired by the management circuit 101 include piece of information about a weather forecast, whether or not the user needs an umbrella when going out, the percentage of laundry drying in the sun, and clothes suitable to today's weather. The management circuit 101 generates, based on the various types of external information thus acquired, image data for the information presentation mode and transmits the image data to the display apparatus 1. The control unit 4 of the display apparatus 1 has the image G21 presenting the external information displayed on the display screen 7A of the display device 7 based on the image data provided by the controller 100. In this case, at a timing when the information displayed on the display screen 7A of the display device 7 is updated, the discharge circuit 57 discharges electricity from the secondary battery 56, converts the charge voltage of the secondary battery 56 into DC voltage with a predetermined voltage value, and supplies the DC voltage to the display device 7. Optionally, the communications unit 10 of the display apparatus 1 may receive the various types of external information from the controller 100, and the control unit 4 may generate image data based on the various types of external information and display the image data on the display screen 7A of the display device 7.

An upper middle part of the image G21 is a label region R31. In the label region R31 of the image G21, displayed are the letters "today's weather" indicating the type of the external information to present. Under the label region R31 of the image G21, provided is a notification region R32 where information to present is displayed. In the notification region R32 of the image G21, displayed are an icon and letters representing today's weather.

On the left of the label region R31 of the image G21, there is an operating region R33, in which a sign "<" indicating the leftward direction is displayed. On the right of the label region R31, there is an operating region R34, in which a sign ">" indicating the rightward direction is displayed. Performing a touch operation on either the operating region R33 or the operating region R34 allows the type of external information to present on the image G21 to be changed. Optionally, the type of the external information to present on the image G21 may be changed automatically at a predetermined timing.

When a touch operation is performed on an operating region R35 of the image G21, the display apparatus 1 displays, on the display screen 7A of the display device 7, an image G1 or G2 in a switch mode in which the operating state of the load 20 as the target is displayed or changed. On the other hand, when a touch operation is performed on the operating region R36 of the image G21, the display apparatus 1 has scene mode images, allowing the user to choose any desired scene from various scenes, displayed on the display screen 7A of the display device 7.

Note that in the display apparatus 1, the timing for the display device 7 to update the information displayed on the display screen 7A does not have to be the timing when the operating unit 8 accepts the command entered by the user (e.g., through the operation of changing the operating state of the load 20). Alternatively, when the communications unit 10 receives a signal from the controller 100, for example, the control unit 4 may update the information displayed on the display screen 7A of the display device 7 in accordance with the signal from the controller 100. Alternatively, the user may perform the operation of changing the operating state of the load 20 using a smartphone. In that case, when the communications unit 10 receives s control signal transmitted from the smartphone, the control unit 4 may control the load 20 in accordance with this control signal to update the information displayed on the display screen 7A of the display device 7. Alternatively, if the user sets an operating time to make the load 20 perform a desired operation (such as the operation of turning the load 20 ON at a preset time when the user makes it a rule to wake up) for the display apparatus 1, then the display apparatus 1 makes the load 20 perform the desired operation when it is the operating time. Optionally, when the load 20 has been made to perform the desired operation, the display apparatus 1 may update the information displayed on the display screen 7A of the display device 7 according to the type of the operation performed.

The display apparatus 1 does not always have to check or change the operating state of the load 20 connected to the display apparatus 1. Alternatively, the display apparatus 1 may display, in accordance with a command entered through the operation performed on the operating unit 8, an image indicating the operating state of any electrical device designated for use in the facility HI, on the display screen 7A. When the user enters, on this image, a command of changing the operating state of the electrical device designated, a control signal is transmitted from the display apparatus 1 to the controller 100 in accordance with the command entered. On receiving the control signal from the display apparatus 1, the controller 100 controls the operating state of the designated electrical device in accordance with the control signal. This allows the user to control the operating states of any other electrical devices by using the display apparatus 1.

Note that the image displayed on the display device 7 does not have to be the image described above but may be changed as appropriate. In addition, the timing for the display device 7 to update the information displayed does not have to be the timing described above, either. Rather, at the timing for the display device 7 to update the information displayed, power required for operation may be supplied from the charge storage element 55 to the display device 7.

### (3) Variations

A display apparatus 1 according to a variation of the exemplary embodiment described above will be described with reference to FIG. 7. In the display apparatus 1 according to this variation, the display device 7 includes a memory-in-pixel liquid crystal display 72 and a light source 73 as a backlight for illuminating a display screen 7A of the memory-in-pixel liquid crystal display 72, which is a major difference from the exemplary embodiment described above. Note that in FIG. 7, the memory-in-pixel liquid crystal display 72 is simply called a "liquid crystal panel." In the respects other than the display device 7, this variation is the same as the embodiment described above, and therefore, any constituent element of this variation, having the same function as a counterpart of the embodiment described above, will be designated by the same reference numeral as that counterpart's, and a detailed description thereof will be omitted herein.

As described above, in the display apparatus 1 according to this variation, the display device 7 includes the memory-in-pixel liquid crystal display 72. In the memory-in-pixel liquid crystal display 72, each of a plurality of pixels that form the display has a memory effect. Thus, when the information displayed is updated, the information displayed may be retained even if the display device 7 is not powered. Thus, using the memory-in-pixel liquid crystal display 72 allows the power consumption to be cut down when the information displayed is retained, compared to the timing of updating the information displayed on the display screen 7A. Meanwhile, to check the information displayed on the memory-in-pixel liquid crystal display 72, the light source 73 as a backlight for illuminating the display screen 7A of the display device 7 from behind the display device 7 needs to be activated. Thus, the power consumption increases at the timing of updating the information displayed and at the timing for the light source 73 to emit light.

Thus, in the display apparatus 1 according to this variation, the discharge circuit 57 powers the display device 7 by using the charge storage element 55 as a power supply at the timing for the display device 7 to update the information displayed on the display screen 7A and at the timing for the light source 73 to emit light. This allows the display apparatus 1 according to this variation to supply the display device 7 with power required for its operation.

Optionally, the display apparatus 1 according to the exemplary embodiment described above may include a light source as a front light for illuminating the display screen 7A of the display device 7 from the front of the display device 7. In that case, the charge storage element 55 may supply power to the display device 7 at the timing for the display device 7 to update the information displayed on the display screen 7A and at the timing for the light source 73 to emit light.

### (Resume)

As can be seen from the foregoing description, a display apparatus (1) according to a first aspect includes a pair of connection terminals (11, 12), a load control circuit (13), a power supply circuit (50), a charge storage element (55) to be charged with electricity by the power supply circuit (50), and a display device (7) having a display screen (7A). The pair of connection terminals (11, 12) is to be electrically connected between a load (20) and an AC power supply (AC). The load control circuit (13) is electrically connected between the pair of connection terminals (11, 12) and controls a current flowing through the load (20). The power supply circuit (50) is electrically connected between the pair of connection terminals (11, 12) and generates, based on power supplied from the AC power supply (AC), power to operate the load control circuit (13). The charge storage element (55) powers the display device (7) at a power feeding timing. The power feeding timing includes at least one of a timing for the display device (7) to update content displayed on the display screen (7A) or a timing for a light source (73), provided to illuminate the display screen (7A) of the display device (7), to emit light.

This aspect allows a display device (7) to conduct a display operation by supplying power from a charge storage element (55) to the display device (7) at a timing when the power consumption of the display device (7) increases. In addition, a load (20) and an AC power supply (AC) are connected to a pair of connection terminals (11, 12), thus requiring only two electric cables (W1, W2) to be connected to the pair of connection terminals (11, 12). Therefore, this aspect provides a display apparatus contributing to simplifying the electric cable (W1, W2) connection.

In a display apparatus (1) according to a second aspect, which may be implemented in conjunction with the first aspect, the charge storage element (55) includes a secondary battery (56).

This aspect allows the display device (7) to be powered by the secondary battery (56) as a power supply at the power feeding timing when the power consumption of the display device (7) increases.

In a display apparatus (1) according to a third aspect, which may be implemented in conjunction with the first or second aspect, the charge storage element (55) includes an electric double layer capacitor.

This aspect allows the display device (7) to be powered by the electric double layer capacitor as a power supply at the power feeding timing when the power consumption of the display device (7) increases.

In a display apparatus (1) according to a fourth aspect, which may be implemented in conjunction with any one of the first to third aspects, the display device (7) includes a self-holding display unit (71). The self-holding display unit (71) is a display unit (71), of which power consumption is less when the content displayed on the display screen (7A) is retained than when the content displayed on the display screen (7A) is updated.

This aspect provides a display apparatus contributing to simplifying the electric cable (W1, W2) connection.

In a display apparatus (1) according to a fifth aspect, which may be implemented in conjunction with any one of the first to third aspects, the display device (7) includes a memory-in-pixel liquid crystal display (72).

This aspect provides a display apparatus contributing to simplifying the electric cable (W1, W2) connection.

A display apparatus (1) according to a sixth aspect, which may be implemented in conjunction with any one of the first to fifth aspects, further includes a charge circuit (53) to charge the charge storage element (55) with an output current of the power supply circuit (50). The charge circuit (53) includes a voltage converter circuit (54) to perform voltage conversion on an output voltage of the power supply circuit (50).

This aspect allows the charge storage element (55) to be charged with the output of the voltage converter circuit (54).

A display apparatus (1) according to a seventh aspect, which may be implemented in conjunction with any one of the first to sixth aspects, further includes a discharge circuit (57) to discharge electricity from the charge storage element (55) at the power feeding timing and suspend discharging electricity from the charge storage element (55) during a power feeding suspension period other than the power feeding timing.

This aspect reduces the chances of the quantity of electrical charges stored in the charge storage element (55) decreasing during the power feeding suspension period.

Note that the constituent elements according to the second to seventh aspects are not essential constituent elements for the display apparatus (1) but may be omitted as appropriate.

### Reference Signs List

- 1: Display Apparatus
- 7: Display Device
- 7A: Display Screen
- 11, 12: Connection Terminal
- 13: Load Control Circuit
- 20: Load
- 50: Power Supply Circuit
- 53: Charge Circuit
- 54: Voltage Converter Circuit
- 55: Charge Storage Element
- 56: Secondary Battery
- 57: Discharge Circuit
- 71: Electronic Paper Display (Display Unit)
- 72: Memory-in-Pixel Liquid Crystal Display
- 73: Light Source
- AC: AC Power Supply

## Claims

1. A display apparatus (1) comprising:
a pair of connection terminals (11, 12) to be electrically connected between a load (20) and an AC power supply (AC);
a load control circuit (13) electrically connected between the pair of connection terminals (11, 12) and configured to control a current flowing through the load (20);
a power supply circuit (50) electrically connected between the pair of connection terminals (11, 12) and configured to generate, based on power supplied from the AC power supply (AC), power to operate the load control circuit (13);
a charge storage element (55) configured to be charged with electricity by the power supply circuit (50); and
a display device (7) having a display screen (7A),
the charge storage element (55) being configured to supply power to the display device (7) at a power feeding timing including at least one of a timing for the display device (7) to update content displayed on the display screen (7A) or a timing for a light source (73), provided to illuminate the display screen (7A) of the display device (7), to emit light.

2. The display apparatus (1) of claim 1, wherein
the charge storage element (55) includes a secondary battery (56).

3. The display apparatus (1) of claim 1 or 2, wherein
the charge storage element (55) includes an electric double layer capacitor.

4. The display apparatus (1) of any one of claims 1 to 3, wherein
the display device (7) includes a self-holding display unit (71), of which power consumption is less when the content displayed on the display screen (7A) is retained than when the content displayed on the display screen (7A) is updated.

5. The display apparatus (1) of any one of claims 1 to 3, wherein
the display device (7) includes a memory-in-pixel liquid crystal display (72).

6. The display apparatus (1) of any one of claims 1 to 5, further comprising a charge circuit (53) configured to charge the charge storage element (55) with an output current of the power supply circuit (50), wherein
the charge circuit (53) includes a voltage converter circuit (54) configured to perform voltage conversion on an output voltage of the power supply circuit (50).

7. The display apparatus (1) of any one of claims 1 to 6, further comprising a discharge circuit (57) configured to discharge electricity from the charge storage element (55) at the power feeding timing and suspend discharging electricity from the charge storage element (55) during a power feeding suspension period other than the power feeding timing.
